# FASCICULE DE BREVET EUROPEEN

(11) **EP 1 481 179 B1**
(45) Date de publication et mention de la délivrance du brevet: **05.09.2007**
(21) Numéro de dépôt: 03727559.1
(22) Date de dépôt: 28.02.2003
(51) Int. Cl.: F16H 57/04

(54) **MECANISME A ENGRENAGES A DISPOSITIF DE CONTROLE POUR LA CREATION D'UNE ATMOSPHERE RAREFIEE**
GETRIEBE MIT VORRICHTUNG ZUR ERZEUGUNG EINER VERDÜNNTEN ATMOSPHÄRE
GEAR MECHANISM WITH CONTROLLED DEVICE FOR GENERATING A RAREFIED ATMOSPHERE

(30) Priorité: 01.03.2002 FR 0202656
(43) Date de publication de la demande: 01.12.2004
(73) Titulaire: Flender Graffenstaden, 67402 Illkirch (FR)
(72) Inventeur: ANTONETTI, Alain, F-67460 Fegersheim (FR); LAUFFENBURGER, Etienne, F-67230 Benfeld (FR); LEONI, Peter, F-67113 Blaesheim (FR); LOOS, Patrick, F-7850 Herrlisheim (FR)
(74) Mandataire: Littolff, Denis
(86) Numéro de dépôt international: PCT/FR2003/000664
(87) Numéro de publication internationale: WO 2003/074903

(56) Documents cités:
- EP-A- 0 739 463
- US-A- 3 489 034
- US-A- 4 848 518

## Description

La présente invention concerne un mécanisme à engrenages, du type multiplicateur ou réducteur de vitesse, par exemple destiné à entraîner ou à être entraîné par des turbomachines.

Ces mécanismes, que l'on peut également considérer comme étant des boîtes de vitesse à rapport fixe, fonctionnent à haute vitesse et sont générateurs de pertes de puissance que les constructeurs cherchent à diminuer en travaillant sur les différents facteurs connus qui les provoquent. Sans traitement particulier, ces pertes représentent en effet de l'ordre de 1% de la puissance totale, et sont par conséquent loin d'être négligeables pour des machines de forte puissance.

Au cours des différentes études réalisées sur ce problème, les constructeurs se sont aperçus que 90% des pertes sont générées en l'absence de toute charge, c'est-à-dire lorsque les mécanismes tournent à vide. Elles sont principalement dues à la maîtrise de la quantité de fluide de lubrification / refroidissement injecté entre les dents des engrenages, aux turbulences gazeuses créées lorsque les pièces dentées tournent à grande vitesse et aux frottements au niveau des paliers supportant les arbres rotatifs auxquels sont fixés lesdites pièces dentées.

La structure traditionnelle de ces mécanismes est la suivante : les pièces dentées sont logées dans des carters clos auxquels sont solidarisés les paliers supportant les arbres rotatifs desdites pièces dentées. Les carters délimitent par conséquent un volume de protection fermé, dans lequel est notamment récupérée l'huile de lubrification / refroidissement injectée au niveau des engrenages. En général, l'huile est ensuite collectée dans une cuve de stockage externe avant d'être réinjectée après refroidissement dans la zone d'engrènement des dentures des pièces dentées.

L'une des voies les plus efficaces pour réduire les pertes, notamment décrite dans le brevet américain US-3 489 034, ce dernier divulgant les caractéristiques du préambule de la revendication 1, consiste en la réalisation d'un vide partiel à l'intérieur du carter. Dans ce cas, les pertes dues aux turbulences provoquées par les vitesses périphériques élevées des dentures sont très sensiblement réduites. L'établissement d'un vide partiel permet ainsi d'éliminer à peu près la moitié des pertes globales, qui peuvent encore être diminuées en agissant notamment sur le débit de fluide de lubrification/refroidissement, sur les paliers, etc.

Alternativement à l'établissement d'un vide, et pour l'obtention d'un résultat analogue, il a également été proposé d'injecter dans le carter un gaz à faible densité, du type hélium, qui remplace l'air et conduit ainsi à une réduction de densité de la phase gazeuse dans le carter.

La réduction de pression a évidemment des incidences sur la conception globale du mécanisme. Ainsi, le circuit de re-circulation du fluide de lubrification / refroidissement est évidemment affecté par la valeur de la pression à l'intérieur de celui-ci. La diminution sensible de la pression gazeuse impose de plus une réflexion sur le comportement de la machine en cas de panne du système qui l'établit, et sur les répercussions d'un éventuel dysfonctionnement dans le circuit de re-circulation.

Ces questions sont celles que se propose de résoudre le mécanisme constituant la présente invention. En particulier, l'existence d'une basse pression gazeuse nécessite l'établissement de moyens mécaniques pour aider au transfert du fluide de lubrification / refroidissement (en général de l'huile) depuis le carter vers la cuve de stockage. De fait, l'huile est généralement transférée à l'aide d'une pompe, dont le fonctionnement peut cependant être contrarié par des phénomènes de cavitation, du fait de la valeur de la pression à l'intérieur du carter.

L'objectif principal de la présente invention est de proposer une configuration qui permette d'éviter tout problème de cavitation lors du pompage de l'huile depuis le carter à destination de la cuve de stockage. Très généralement, l'invention constitue un dispositif de contrôle pour la création d'une atmosphère raréfiée dans un mécanisme à engrenages.

Selon un second objectif connexe, le mécanisme de l'invention doit pouvoir continuer à fonctionner, au moins provisoirement, même en cas de faillite du système d'établissement de la basse pression, et/ou des moyens de vidange.

Ces objectifs, et d'autres qui apparaîtront à la lecture de la description détaillée de l'invention, sont réalisés par le mécanisme à engrenages de l'invention, qui se compose plus précisément d'au moins deux pièces dentées logées dans un carter, fixée chacune à un arbre rotatif dans des paliers solidaires du carter ; d'une cuve de stockage d'huile de lubrification / refroidissement à injecter dans chaque zone d'engrenage des pièces dentées ; de moyens pour véhiculer l'huile de ladite cuve aux zones d'engrenage en vue de l'y injecter à une pression supérieure à la pression régnant dans le carter ; de moyens pour réduire la pression dans le carter et de moyens de transfert de l'huile à destination de la cuve de stockage.

Selon l'invention, ce mécanisme est principalement caractérisé en ce qu'il comporte un premier réceptacle intégré dans le carter pour la récupération de l'huile de lubrification / refroidissement, qui communique avec un second réceptacle dans lequel l'huile peut s'écouler à partir du premier réceptacle, ledit second réceptacle communiquant à son tour avec la cuve de stockage, lesdits réceptacles et la cuve étant agencés de sorte que l'huile puisse s'y déverser successivement par écoulement gravitaire, une pression identique régnant dans les réceptacles alors que la cuve est toujours à pression atmosphérique, lesdits moyens de transfert étant disposés en aval du second réceptacle et asservis au niveau d'huile dans celui-ci, des moyens étant de plus prévus pour qu'en cas de panne des moyens de réduction de la pression et/ou de vidange, le fonctionnement du mécanisme à la pression atmosphérique soit assuré.

L'apport majeur de l'invention réside dans l'existence du second réceptacle, qui permet une gestion tout à fait particulière du circuit de re-circulation de l'huile d'une part, et une approche spécifique du problème du fonctionnement alternatif du mécanisme lorsque les moyens d'établissement de la pression réduite et/ou de transfert ne fonctionnent pas correctement, pour quelque raison que ce soit. En fait, le second réceptacle peut être assimilé à un bassin de rétention, qui permet une régulation de la pression entre deux parties du circuit de re-circulation fonctionnant respectivement à basse pression et à la pression atmosphérique.

L'agencement particulier des différents éléments du circuit, à savoir les deux réceptacles et la cuve de stockage, est également fondamental en ce qu'il permet l'écoulement gravitaire de l'huile qui facilite le fonctionnement dans toutes les hypothèses de travail.

L'asservissement des moyens de transfert au niveau d'huile permet enfin de ne recourir à ces derniers que lorsque les conditions sont appropriées pour leur fonctionnement.

De préférence, le second réceptacle consiste en un réservoir d'huile intermédiaire distinct du carter auquel il est relié par un conduit, ledit réservoir se situant au moins partiellement sous le carter, de telle sorte qu'en fonctionnement, le niveau d'huile n'atteigne jamais le niveau du fond du premier réceptacle.

La séparation physique entre le carter et ce second réceptacle présente un avantage considérable : elle permet l'adaptation ultérieure d'un système de fonctionnement à basse pression à un mécanisme à engrenage(s) traditionnel, c'est-à-dire fonctionnant à la pression atmosphérique. Les différents composants nécessaires à l'adaptation d'un système à basse pression peuvent en effet être prévus extérieurs au carter et à la cuve de stockage, comme cela ressortira notamment plus clairement de la description détaillée à venir.

En variante, il est bien entendu cependant également possible de prévoir le second réceptacle intégré au carter.

Selon une configuration classique, le premier réceptacle est simplement constitué par le fond dudit carter.

Le circuit de re-circulation de l'huile de l'huile de lubrification / refroidissement comporte, comme mentionné auparavant, des moyens de transfert du second réceptacle. Ceux-ci consistent plus particulièrement en un groupe motopompe dont le moteur est commandé par un variateur asservi au niveau d'huile dans le second réceptacle, entre deux limites dudit niveau, un capteur marquant la limite inférieure permettant de stopper ledit groupe motopompe lorsque la pression d'entrée de l'huile dans la pompe tombe à un niveau qui risque d'y produire un phénomène de cavitation, alors que le dépassement par l'huile de la limite supérieure enclenche l'ouverture d'une vanne de vidange du second réceptacle.

Entre les deux limites de fonctionnement, la pompe de vidange adapte sa capacité de pompage au niveau réel d'huile dans le réservoir intermédiaire.

Lorsque l'huile dépasse la limite supérieure, cela signifie en principe que lesdits moyens de transfert ne sont plus fonctionnels. Dans ce cas, l'ouverture de la vanne de vidange permet l'écoulement gravitaire de l'huile à un débit suffisant pour assurer la continuité du fonctionnement de l'ensemble. Les moyens d'établissement de la base pression sont, dans ce cas, coupés pour que le système revienne à un fonctionnement à pression atmosphérique.

A l'inverse, lorsque le niveau d'huile atteint la limite inférieure, la pompe de transfert stoppe son fonctionnement jusqu'à ce que le niveau d'huile repasse au-dessus de ladite limite inférieure, pour éviter tout dommage résultant de possibles cavitations.

Selon une possibilité, le variateur commandant le moteur du groupe motopompe est un variateur de fréquence piloté par un convertisseur transformant la mesure analogique du niveau d'huile en une grandeur électrique exploitable par le variateur.

Le niveau inférieur correspond par exemple à un courant donné, qui progresse linéairement jusqu'à un courant supérieur correspondant au niveau supérieur.

De préférence, la vanne de vidange du second réceptacle est située au voisinage de son fond, et s'ouvre alors que le différentiel de la pression qui s'y exerce est de l'ordre de 1 bar.

L'ouverture de cette vanne lorsqu'une pression suffisante s'y exerce correspond en fait à une sécurité passive : il n'y a pas de détection en boucle d'une grandeur qui reflète le niveau d'huile, mais un simple mécanisme tout ou rien adapté à la vanne, qui l'ouvre au-delà d'un certain niveau. Ainsi, si les moyens de transfert du réservoir intermédiaire tombent en panne, le niveau d'huile augmente progressivement dans ledit réservoir, jusqu'à ce que le différentiel de la pression exercée sur la vanne située en partie basse soit de l'ordre de 1 bar. Cela provoque alors l'ouverture de cette vanne et l'écoulement de l'huile.

Dans le cas où les moyens d'établissement de la pression réduite tombent en panne, la pression remonte à la pression atmosphérique à l'intérieur dudit réservoir intermédiaire, et la vanne s'ouvre également.

Quelle que soit la panne envisagée, le mécanisme de l'invention continue à fonctionner normalement en pression atmosphérique.

Pour respecter les valeurs de pression permettant à une pompe de fonctionner normalement, sans être perturbée par des phénomènes de cavitations, le capteur marquant la limite inférieure au-delà de laquelle le groupe motopompe est arrêté est disposé à un niveau correspondant sensiblement à une pression d'entrée limite minimale dans la pompe de transfert.

Cette pression correspond bien entendu à l'addition de la pression engendrée par la hauteur d'huile et de la pression gazeuse régnant au-dessus du niveau d'huile dans le réservoir intermédiaire.

Selon l'invention, l'arrêt des moyens de réduction de la pression gazeuse et/ou de vidange du second réceptacle provoque l'ouverture d'une vanne de mise à l'air qui fait remonter la pression au niveau atmosphérique dans les enceintes soumises à ces moyens. Ceux-ci, qui ont pour fonction d'abaisser la pression dans une partie du circuit entre 0,1 et 0,2 bar, sont de préférence constitués d'un groupe motopompe classique, dont la pompe est reliée à une partie du circuit dans laquelle elle crée un vide partiel.

La dernière partie du circuit hydraulique de re-circulation de l'huile est celle qui relie la cuve de stockage aux buses d'injection, au niveau des engrenages. Cette partie comporte des moyens de véhiculer l'huile de la cuve aux buses, comprennent plus précisément une pompe permettant une injection d'huile au mécanisme à engrenages.

Les caractéristiques, emplacements d'implantations et modes de fonctionnement de l'ensemble des éléments du circuit qui ont été évoqués auparavant permettent un fonctionnement du circuit aussi bien à la pression atmosphérique que, au moins pour une partie du circuit, à basse pression. L'objectif visant à permettre l'adaptation d'un système à basse pression à une installation classique fonctionnant à pression atmosphérique est également rempli par l'invention.

Celle-ci va à présent être décrite plus en détail, en référence à l'unique figure annexée, qui représente une vue schématique du mécanisme répondant aux caractéristiques de l'invention.

Ce mécanisme comporte un carter (1) qui renferme les pièces dentées solidaires d'arbres rotatifs dont l'un (2) est visible puisqu'il sort du carter (1) du côté apparent de celui-ci sur la figure, alors que l'autre sort du côté opposé. Son emplacement correspond cependant à la surface circulaire (3), qui représente un accès possible au palier de rotation solidaire du carter (1).

Le fond (4) du carter (1) constitue le premier réceptacle, dans lequel se déverse l'huile injectée au niveau des engrenages. Cette huile, qui provient de la cuve de stockage (5), est pompée par la pompe (6) en direction de buses d'injection situées au voisinage des zones d'engrenage des dents des pièces dentées et de dispositifs d'alimentation des coussinets. L'huile recueillie sur le fond (4) du carter (1) s'écoule ensuite vers un réservoir intermédiaire (7) via un conduit (8) localisé à proximité dudit fond (4). Pour que l'écoulement puisse être gravitaire, le réservoir intermédiaire (7) est situé, au moins dans sa partie destinée à stocker l'huile, en dessous du fond (4).

Un groupe motopompe (9) permet ensuite de véhiculer l'huile accumulée dans le réservoir (7), sous certaines conditions, vers la cuve de stockage principale (5). Le moteur du groupe motopompe (9) est piloté par un variateur de fréquence (10) lui-même piloté par un convertisseur (11) qui transforme le niveau analogique de l'huile dans le réservoir intermédiaire (7) en une grandeur électrique proportionnelle au niveau, par exemple un courant électrique. Le moteur n'est cependant alimenté qu'entre deux valeurs seuils de niveau d'huile, matérialisés sur la figure par des repères respectivement inférieur (12) et supérieur (13).

Lorsque le niveau d'huile dépasse en descendant la limite inférieure (12), l'activité du groupe motopompe (9) est stoppée, pour éviter tout risque de dysfonctionnement dû par exemple à des phénomènes de cavitation dans la pompe. Ces phénomènes risquent de se produire lors de fonctionnement sous vide, c'est-à-dire lorsque la pompe à vide du groupe motopompe (14) est actionnée, établissant un vide partiel (entre 0,1 et 0,2 bar) à la fois dans le carter (1) et dans le réservoir intermédiaire (7). Dans ce cas, la pression à l'entrée de la pompe peut s'avérer trop faible si le niveau d'huile n'est pas supérieur à une limite inférieure, le seuil de pression étant calculé à partir de la pression due à la hauteur d'huile et à la pression gazeuse.

Lorsque le niveau d'huile augmente à l'inverse de manière incontrôlée, et atteint le seuil (13), la pression dans le réservoir intermédiaire (7) est suffisante pour ouvrir une vanne (15) donnant accès, par écoulement gravitaire, à la cuve de stockage principal (5).

Cela se produit notamment si le groupe motopompe (9) tombe en panne, et que l'huile stockée dans le réservoir (7) n'est plus évacuée par cette voie. Dans ce cas, le niveau monte, jusqu'à atteindre le seuil supérieur (13), qui provoque l'ouverture de la vanne (15). Le fonctionnement du mécanisme de l'invention n'est pas perturbé, et se poursuit malgré ladite panne, grâce à l'écoulement gravitaire de l'huile dans la cuve (5).

Ce fonctionnement se poursuit en fait à la pression atmosphérique car, en cas de panne du groupe motopompe (9), la vanne (16) de mise à l'air des volumes sous vide s'ouvre.

De même, si la pompe à vide du groupe motopompe (14) tombe en panne, cette même vanne (16) s'ouvre, et le mécanisme continue à fonctionner à la pression atmosphérique. Sur un plan pratique, le conduit reliant la pompe à vide du groupe motopompe (14) au carter (1) est équipé d'un séparateur air / huile (17), qui permet la récupération de l'huile dans le réservoir intermédiaire (7).

Dans le cas où la pompe à vide d'une part, et la pompe de vidange du groupe motopompe (9) d'autre part tombent simultanément en panne, par exemple par suite d'une coupure électrique, la vanne de mise à l'air (16) d'une part, et la vanne de vidange d'autre part, s'ouvrent et permettent la poursuite du fonctionnement en mode atmosphérique.

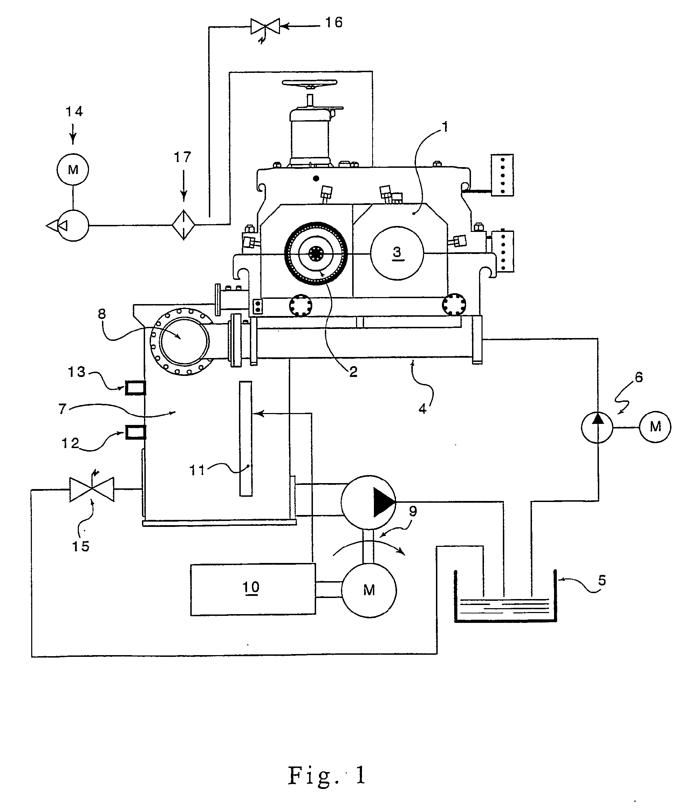

L'exemple de configuration qui est décrit dans la figure 1 ne doit pas être considéré comme limitatif de l'invention, qui englobe au contraire toutes les variantes de forme et de configuration couvertes par les revendications.

## Revendications

1. Mécanisme à engrenage(s) comportant au moins deux pièces dentées logées dans un carter (1), fixée chacune à un arbre rotatif dans des paliers solidaires du carter (1) ; une cuve de stockage (5) d'huile de lubrification / refroidissement à injecter dans chaque zone d'engrenage des pièces dentées ; des moyens (6) pour véhiculer l'huile de ladite cuve aux zones d'engrenage en vue de l'y injecter à une pression supérieure à la pression régnant dans le carter ; des moyens (14) pour réduire la pression gazeuse dans le carter (1) ; des moyens (9 de vidange de l'huile, à destination de la cuve de stockage (5), **caractérisé en ce qu'**il comporte un premier réceptacle (4) intégré dans le carter (1) pour la récupération de l'huile de lubrification / refroidissement, qui communique avec un second réceptacle (7) dans lequel l'huile peut s'écouler à partir du premier réceptacle (4), le second réceptacle (7) communiquant à son tour avec la cuve de stockage (5), lesdits réceptacles (4, 7) et la cuve (5) étant agencés de sorte que l'huile puisse s'y déverser successivement par écoulement gravitaire, une pression identique régnant dans les réceptacles (4, 7) alors que la cuve (5) est toujours à pression atmosphérique, lesdits moyens (9) de transfert étant disposés en aval du second réceptacle (7) et asservis au niveau d'huile dans celui-ci, des moyens (15, 16) étant de plus prévus pour qu'en cas de panne des moyens (14) de réduction de la pression gazeuse et/ou de transfert (9), le fonctionnement du mécanisme à la pression atmosphérique soit assuré.

2. Mécanisme à engrenage(s) selon la revendication précédente, **caractérisé en ce que** le second réceptacle consiste en un réservoir d'huile intermédiaire (7) distinct du carter (1) auquel il est relié par un conduit (8), ledit réservoir (7) se situant par rapport au carter (1) de sorte que le niveau d'huile n'y atteigne jamais le fond du premier réceptacle.

3. Mécanisme à engrenage(s) selon l'une des revendications 1 et 2, **caractérisé en ce que** le premier réceptacle est constitué par le fond (4) du carter (1).

4. Mécanisme à engrenage(s) selon l'une des revendications précédentes, **caractérisé en ce que** les moyens de transfert consistent en un groupe motopompe (9) dont le moteur est commandé par un variateur (10) asservi au niveau d'huile dans le second réceptacle, entre deux limites (12, 13) dudit niveau, un capteur marquant la limite inférieure (12) permettant de stopper ledit groupe motopompe (9) lorsque la pression d'entrée de l'huile dans la pompe tombe à un niveau qui risque d'y produire des phénomènes de cavitation, alors que le dépassement par l'huile de la limite supérieure (13) enclenche l'ouverture d'une vanne (15) de vidange du second réceptacle (7).

5. Mécanisme à engrenage(s) selon la revendication précédente, **caractérisé en ce que** le variateur (10) commandant le moteur du groupe motopompe (9) est un variateur de fréquence (10) piloté par un convertisseur (11) transformant la mesure analogique du niveau d'huile en une grandeur électrique exploitable par le variateur (10).

6. Mécanisme à engrenage(s) selon l'une des revendications 4 et 5, **caractérisé en ce que** la vanne (15) de vidange du second réceptacle (7) est située au voisinage de son fond, et s'ouvre lorsque le différentiel de pression qui s'y exerce est de l'ordre de 1 bar.

7. Mécanisme à engrenage(s) selon l'une quelconque des revendications 4 à 6, **caractérisé en ce que** le capteur marquant la limite inférieure (12) au-delà de laquelle le groupe motopompe (9) est arrêté est disposé à un niveau dans le second réceptacle (7) correspondant sensiblement à une pression d'entrée limite minimale dans la pompe de transfert.

8. Mécanisme à engrenage(s) selon l'une quelconque des revendications précédentes, **caractérisé en ce que** l'arrêt des moyens de réduction (14) de la pression gazeuse et/ou de vidange (9) du second réceptacle (7) provoque l'ouverture d'une vanne (16) de mise à l'air qui fait remonter la pression au niveau atmosphérique dans les enceintes (1, 7) qui y sont soumises.

9. Mécanisme à engrenage(s) selon l'une quelconque des revendications précédentes, **caractérisé en ce que** lesdits moyens de réduction (14) de la pression gazeuse abaissent la pression entre 0,1 et 0,2 bar.

10. Mécanisme à engrenage(s) selon l'une quelconque des revendications précédentes, **caractérisé en ce que** les moyens de réduction de la pression gazeuse consistent en un groupe motopompe (14) qui établit un vide partiel dans les enceintes (1, 7) auxquelles il s'applique.

11. Mécanisme à engrenage(s) selon l'une quelconque des revendications précédentes, **caractérisé en ce que** les moyens de véhiculer l'huile de lubrification / refroidissement de la cuve de stockage (5) aux zones d'injection comportent une pompe (6) permettant une injection du fluide de lubrification / refroidissement au niveau des engrenages.

## Claims

1. Gear mechanism comprising at least two toothed parts housed in a casing (1), each secured to a shaft rotating in bearings joined to the casing (1); a storage tank (5) of lubricating/cooling oil to be injected into each meshing zone of the toothed parts; means (6) for delivering the oil from said tank to the meshing zones with a view to injecting it there at a pressure higher than the pressure prevailing in the casing; means (14) for reducing the gas pressure in the casing (1); means (9) for draining the oil back to the storage tank (5), **characterised in that** it has a first receptacle (4) integrated in the casing (1) for collecting the lubricating/cooling oil, which communicates with a second receptacle (7) into which the oil is able to flow from the first receptacle (4), which second receptacle (7) in turn communicates with the storage tank (5), said receptacles (4, 7) and the tank (5) being disposed so that the oil is able to flow into them successively by gravitational flow, and an identical pressure prevails in the receptacles (4, 7) whereas the tank (5) is always at atmospheric pressure, and said delivery means (9) are disposed downstream of and coupled with the second receptacle (7) on a level with the oil contained in it, and means (15, 16) are also provided so that if the means (14) for reducing the gas pressure and/or the delivery means (9) fail, operation of the mechanism is assured at atmospheric pressure.

2. Gear mechanism as claimed in the preceding claim, **characterised in that** the second receptacle comprises an intermediate oil tank (7) separate from the casing (1), to which it is linked by a pipe (8), said tank (7) being disposed relative to the casing (1) so that the oil level never reaches the bottom of the first receptacle.

3. Gear mechanism as claimed in one of claims 1 and 2, **characterised in that** the first receptacle is formed by the base (4) of the casing (1).

4. Gear mechanism as claimed in one of the preceding claims, **characterised in that** the delivery means comprises a motor-driven pump assembly (9), the motor of which is controlled by a switch (10) connected on a level with the oil in the second receptacle between two limits (12, 13) of said level, and a sensor marking the lower limit (12) enables said motor-driven pump assembly (9) to be stopped if the intake pressure of the oil at the pump falls to a level which risks causing cavitation phenomena, whereas a rise of the oil above the upper limit (13) triggers the opening of a drainage valve (15) of the second receptacle (7).

5. Gear mechanism as claimed in the preceding claim, **characterised in that** the switch (10) controlling the motor of the motor-driven pump assembly (9) is a frequency switch (10) driven by a converter (11) transforming the analogue measurement of the oil level into an electric value which can be used by the switch (10).

6. Gear mechanism as claimed in one of claims 4 and 5, **characterised in that** the drainage valve (15) of the second receptacle (7) is disposed in the vicinity of its base and opens when the pressure differential prevailing there is in the order of 1 bar.

7. Gear mechanism as claimed in any one of claims 4 to 6, **characterised in that** the sensor marking the lower limit (12) below which the motor-driven pump assembly (9) is stopped is disposed in the second receptacle (7) at a level essentially corresponding to a minimum intake pressure limit at the delivery pump.

8. Gear mechanism as claimed in any one of the preceding claims, **characterised in that** the stoppage of the means (14) for reducing the gas pressure and/or the drainage means (9) of the second receptacle (7) causes a venting valve (16) to open, which raises the pressure to atmospheric pressure in the enclosures (1, 7) exposed to it.

9. Gear mechanism as claimed in any one of the preceding claims, **characterised in that** said means (14) for reducing the gas pressure reduce the pressure to between 0.1 and 0.2 bar.

10. Gear mechanism as claimed in any one of the preceding claims, **characterised in that** the means for reducing the gas pressure comprise a motor-driven pump assembly (14) which establishes a partial vacuum in the enclosures (1, 7) to which it is applied.

11. Gear mechanism as claimed in any one of the preceding claims, **characterised in that** the means for delivering the lubricating/cooling oil from the storage tank (5) to the injection zones comprise a pump (6) enabling the lubricating/cooling fluid to be injected on a level with the gears.

## Patentansprüche

1. Getriebe, umfassend mindestens zwei in einem Gehäuse (1) untergebrachte gezahnte Teile, die jedes an einer Welle in Lagern befestigt sind, die mit dem Gehäuse (1) fest verbunden sind; eine Wanne (5) zum Speichern von Schmier-/Kühlöl, das in jede Verzahnungszone der gezahnten Teile einzuspritzen ist; Mittel (6), um das Öl aus dieser Wanne zu den Verzahnungszonen zu fördern, um es bei einem Druck einzuspritzen, der höher ist als der im Gehäuse herrschende Druck; Mittel (14), um den Gasdruck im Gehäuse (1) zu mindern; Mittel (9), um das Öl zur Speicherwanne (5) hin abzulassen, **dadurch gekennzeichnet, dass** es einen im Gehäuse (1) integrierten ersten Auffangbehälter (4) zum Auffangen des Schmier-/Kühlöls aufweist, der mit einem zweiten Auffangbehälter (7) in Verbindung steht, in welchen das Öl vom ersten Behälter (4) aus ablaufen kann, wobei der zweite Auffangbehälter (7) seinerseits mit der Speicherwanne (5) in Verbindung steht, diese Auffangbehälter (4, 7) und die Wanne (5) so angeordnet sind, dass das Öl diese nacheinander durch Schwerkraftströmung durchströmen kann, in den Auffangbehältern (4, 7) ein gleicher Druck herrscht, während die Wanne (5) stets bei atmosphärischem Druck ist, die Fördermittel (9) hinter dem zweiten Auffangbehälter (7) angeordnet sind und dem Ölstand darin nachgeführt werden, außerdem Mittel (15, 16) vorgesehen sind, damit bei einem Ausfall des Gasdruckminderungs- (14) und/oder Fördermittels (9) der Betrieb des Getriebes bei atmosphärischem Druck gewährleistet ist.

2. Getriebe nach dem vorherigen Anspruch, **dadurch gekennzeichnet, dass** der zweite Auffangbehälter aus einem Zwischenölbehälter (7) besteht, der vom Gehäuse (1) separat ist, mit welchem er durch eine Leitung (8) verbunden ist, wobei dieser Auffangbehälter (7) relativ zum Gehäuse (1) so angeordnet ist, dass der Ölstand darin nie den Boden des ersten Auffangbehälters erreicht.

3. Getriebe nach einem der Ansprüche 1 und 2, **dadurch gekennzeichnet, dass** der erste Auffangbehälter aus dem Boden (4) des Gehäuses (1) besteht.

4. Getriebe nach einem der vorherigen Ansprüche, **dadurch gekennzeichnet, dass** die Fördermittel aus einer Motorpumpe (9) bestehen, deren Motor durch einen Regler (10) gesteuert wird, der dem Ölstand im zweiten Auffangbehälter nachgeführt wird, zwischen zwei Grenzwerten (12, 13) dieses Ölstands, wobei ein Messfühler, der den unteren Grenzwert (12) anzeigt, es erlaubt, diese Motorpumpe (9) auszuschalten, wenn der Eingangsdruck des Öls in der Pumpe auf ein Niveau abfällt, bei dem die Gefahr des Auftretens von Kavitationsphänomenen besteht, während die Überschreitung des oberen Grenzwerts (13) durch das Öl die Öffnung eines Ablassschiebers (15) des zweiten Auffangbehälters (7) auslöst.

5. Getriebe nach dem vorherigen Anspruch, **dadurch gekennzeichnet, dass** der Regler (10), der die Motorpumpe (9) steuert, ein Frequenzregler (10) ist, der durch einen Wandler gesteuert wird, der die analoge Messung des Ölstands in eine elektrische Größe umwandelt, die vom Regler (10) verwendet werden kann.

6. Getriebe nach einem der Ansprüche 4 und 5, **dadurch gekennzeichnet, dass** der Ablassschieber (15) des zweiten Auffangbehälters (7) in der Nachbarschaft seines Bodens angeordnet ist und sich öffnet, wenn das Druckdifferenzial, das auf ihn ausgeübt wird, in der Größenordnung von 1 Bar liegt.

7. Getriebe nach einem der Ansprüche 4 bis 6, **dadurch gekennzeichnet, dass** der Messfühler, der die Untergrenze (12) anzeigt, jenseits welcher die Motorpumpe (9) ausgeschaltet wird, im zweiten Auffangbehälter (7) auf einer Höhe angeordnet ist, die im Wesentlichen einer Untergrenze des Eingangsdrucks in der Förderpumpe entspricht.

8. Getriebe nach einem der vorherigen Ansprüche, **dadurch gekennzeichnet, dass** die Unterbrechung der Gasdruckminderungs- (14) und/oder Ablassmittel (9) des zweiten Auffangbehälters (7) die Öffnung eines Luftschiebers bewirkt, die den Druck in den Kammern (1, 7), die dieser ausgesetzt sind, wieder auf atmosphärischen Druck ansteigen lässt.

9. Getriebe nach einem der vorherigen Ansprüche, **dadurch gekennzeichnet, dass** die Gasdruckminderungsmittel (14) den Druck zwischen 0,1 und 0,2 Bar mindern.

10. Getriebe nach einem der vorherigen Ansprüche, **dadurch gekennzeichnet, dass** die Gasdruckminderungsmittel aus einer Motorpumpe (14) bestehen, die in den Kammern (1, 7), auf welche sie wirkt, ein Teilvakuum erzeugt.

11. Getriebe nach einem der vorherigen Ansprüche, **dadurch gekennzeichnet, dass** die Mittel, um das Schmier-/Kühlöl aus der Speicherwanne (5) zu den Einspritzzonen zu fördern, eine Pumpe (6) umfassen, die eine Einspritzung der Schmier-/Kühlflüssigkeit auf der Höhe der Verzahnungen erlauben.
